(19) Europäisches Patentamt
European Patent Office
Office européen des brevets

(11) **EP 2 854 250 A2**

(12) **EUROPÄISCHE PATENTANMELDUNG**

(43) Veröffentlichungstag:
**01.04.2015  Patentblatt 2015/14**

(51) Int Cl.:
***H02J 3/14*** *(2006.01)*        ***H02J 13/00*** *(2006.01)*

(21) Anmeldenummer: **14405069.7**

(22) Anmeldetag: **15.09.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **16.09.2013  CH 15832013**

(71) Anmelder: **BKW Energie AG**
**3013 Bern (CH)**

(72) Erfinder:
• **Waldis, Severin**
  **CH-3012 Bern (CH)**
• **Panneck-Conradi, Thorsten**
  **CH-3006 Bern (CH)**

(74) Vertreter: **Rüfenacht, Philipp Michael et al**
**Keller & Partner**
**Patentanwälte AG**
**Schmiedenplatz 5**
**Postfach**
**3000 Bern 7 (CH)**

(54) **Verfahren zur Analyse eines aggregierten Verbrauchssignals und zur Laststeuerung in einem elektrischen Versorgungssystem**

(57)    In einem Verfahren zur Analyse eines aggregierten Verbrauchssignals (41) einer Mehrzahl von Verbrauchern mit zeitlich variablem Bedarf an elektrischer Energie ist eine erste Verbrauchergruppe der Mehrzahl von Verbrauchern hinsichtlich einer zeitlichen Verteilung des Bedarfs an elektrischer Energie zentral beeinflussbar, und eine zweite Verbrauchergruppe der Mehrzahl von Verbrauchern ist nicht zentral beeinflussbar. Eine Parametrisierung (44) für das aggregierte Verbrauchssignal (41) wird bereitgestellt, wobei die Parametrisierung eine erste Funktionengruppe (43.1...43.6) von Funktionen zur Parametrisierung des Verbrauchs der ersten Verbrauchergruppe und eine zweite Funktionengruppe (42) zur Parametrisierung des Verbrauchs der zweiten Verbrauchergruppe umfasst. Nachfolgend wird eine Optimierung von Parametern der Parametrisierung zur Minimierung einer Fehlerfunktion durchgeführt, welche einer Abweichung zwischen der Parametrisierung und dem aggregierten Verbrauchssignal entspricht.

**Fig. 3**

EP 2 854 250 A2

## Beschreibung

### Technisches Gebiet

Die Erfindung betrifft ein Verfahren zur Analyse eines aggregierten Verbrauchssignals einer Mehrzahl von Verbrauchern mit zeitlich variablem Bedarf an elektrischer Energie, wobei eine erste Verbrauchergruppe der Mehrzahl von Verbrauchern hinsichtlich einer zeitlichen Verteilung des Bedarfs an elektrischer Energie zentral beeinflussbar ist und wobei eine zweite Verbrauchergruppe der Mehrzahl von Verbrauchern nicht zentral beeinflussbar ist. Die Erfindung betrifft weiter ein Verfahren zur Laststeuerung in einem elektrischen Versorgungssystem.

### Stand der Technik

Die Gesamtlast in einem elektrischen Energiesystem schwankt aufgrund einer Vielzahl von Faktoren, z. B. aufgrund unterschiedlicher Aussentemperaturen, Wochentage, Tageszeit u.s.w. Das Energiesystem muss grundsätzlich in der Lage sein, die maximal auftretende Last zu bewältigen, d. h. es muss für die maximal zu erwartende Last ausgelegt werden. Da sowohl die Kosten für die Bereitstellung als auch diejenigen für die Instandhaltung des Energiesystems bei einer Auslegung für eine höhere Last erhöht sind, besteht ein Bedürfnis, die maximal zu erwartende Last nach Möglichkeit zu reduzieren.

Ein wichtiges Instrument dazu ist die Laststeuerung, wobei der Betrieb elektrischer Verbraucher, namentlich solcher, die hinsichtlich ihres Betriebs und damit ihrer Leistungsaufnahme bzw. ihres Energiebedarfs zeitlich flexibel sind, wie z. B. thermische Speicher (Warmwasserboiler oder Speicherheizung), zentral beeinflusst wird. Die Steuerung von Lasten ermöglicht eine gleichmässigere und damit effizientere Ausnutzung der Netzinfrastruktur und eine optimale Bewirtschaftung von Bandenergie erzeugenden Kraftwerken (beispielsweise Flusslaufkraftwerken), indem der Betrieb der erwähnten flexiblen Verbraucher in Zeiten von ansonsten geringem Verbrauch, also beispielsweise in die Nacht, verlegt wird.

Bereits seit einigen Jahrzehnten wird hierfür u. a. die sogenannte Rundsteuertechnik verwendet. Das Rundsteuersystem besteht aus einer Sendeanlage und mehreren Empfängern, wobei die Signale bei dieser Technik über das Stromnetz versendet werden. Die zentrale Rundsteuersendeanlage befindet sich typischerweise in einer Transformatorenstation (Unterstation) des elektrischen Energieversorgungsnetzes und deckt jeweils eine Teilmenge des Netzes ab. Die dezentralen Empfänger befinden sich unmittelbar vor den zu schaltenden Lasten, also beispielsweise in einem Haushalt vor dem Warmwasserboiler (elektrische Warmwasseraufbereitung mit Speicherung). Die Rundsteuersendeanlage sendet zu einem bestimmten Zeitpunkt ein Signal aus, welches bei der Empfängeranlage einen Schaltprozess auslöst: Der elektrische Verbraucher wird freigeschaltet (EIN). Nach einer bestimmten Dauer wird über ein weiteres Signal der elektrische Verbraucher wieder vom Netz getrennt (AUS). Die Rundsteueranlage, ist in der Lage, über eine entsprechende Codierung mehrere Gruppen von elektrischen Verbrauchern anzusteuern. So können zum Beispiel in einem bestimmten Teil des Verteilnetzes die Boiler in 8 verschiedene Gruppen eingeteilt sein. Wird von der Rundsteuersendeanlage ein entsprechend codiertes Signal ausgesendet, werden alle Boiler, welche dieser Signalgruppe angehören, eingeschaltet oder ausgeschaltet. Damit können verschiedene Gruppen von Lasten zu unterschiedlichen Zeiten ein- oder ausgeschaltet werden. Damit kann eine bessere zeitliche Verteilung der Lasten und somit eine gleichmässigere Auslastung des Elektrizitätsnetzes und der Kraftwerke erreicht werden. Moderne Rundsteueranlagen sind in der Lage, über eine Sendeanlage mehrere hundert verschiedene Gruppen von Verbrauchern anzusteuern.

Die Einzelerfassung des Verbrauchs jedes der per Rundsteueranlage geschalteten Verbraucher ist in der Regel nicht möglich. Die bei den Kunden heute in der Regel vorhandenen Messeinrichtungen sind nicht für eine zeitaufgelöste Messung konzipiert, es wird in der Regel nur ein- bzw. zweimal im Jahr der Wert des Gesamtverbrauchs abgelesen. Folglich verfügt der Netzbetreiber bzw. Energieversorger über zeitlich aggregierte Daten, z. B. Jahreswerte, mit hoher räumlicher Auflösung.

Nur für einige ausgewählte grosse Bezüger stehen zeitlich höher aufgelöste Daten zur Verfügung, z. B. viertelstündliche Mittelwerte der bezogenen Leistung. Eine zeitlich hochaufgelöste Lastmessung, mit einer Auflösung von beispielsweise 1 Minute, findet ansonsten in der Regel nur in den Unterstationen des Verteilnetzes statt. Das entsprechende Verbrauchssignal repräsentiert jeweils die geographisch aggregierte Messung der abgegebenen Leistung in ein bestimmtes Netzgebiet, in Funktion der Zeit. Das entsprechende räumlich aggregierte Verbrauchssignal mit hoher zeitlicher Auflösung entspricht somit der Summe des jeweiligen Verbrauchs einer Mehrzahl von Verbrauchern mit zeitlich variablem Bedarf an elektrischer Energie. Darunter sind Verbraucher, die hinsichtlich einer zeitlichen Verteilung des Bedarfs an elektrischer Energie zentral, d. h. vom Netzbetreiber, dem Energieversorger oder einer dritten Stelle, beeinflussbar sind, beispielsweise durch die erwähnte Rundsteuerung, und andere Verbraucher, die nicht zentral beeinflussbar sind.

Es ist zu beachten, dass aufgrund dezentraler Energieproduktion räumlich aggregierte Verbrauchssignale auch negative Werte annehmen können, wenn nämlich die im entsprechenden Gebiet erzeugte Leistung die bezogene Leistung übertrifft.

Die Lastverteilung, welche mittels des Rundsteuersystems erreicht werden kann, wird heutzutage manuell optimiert und fest, also im Wesentlichen statisch, programmiert. Über das genaue Verhalten der gesteuerten Lasten und das genaue Volumen bestehen aus den erwähnten Gründen nur spärliche Informationen. Entsprechend ist die Optimierung der Lastverteilung eine Art Trial-and-Error-Verfahren, welches sich über mehrere Jahre hinziehen kann. Der Leistungsbezug der steuerbaren Lasten kann heutzutage in der Regel nicht über eine direkte Messung bestimmt werden, da Messungen der Leistung wie vorstehend erwähnt nur aggregiert über unterschiedlichste Verbraucher, ob steuerbar oder nicht, vorliegen. Entsprechend werden Prognosen über den täglichen elektrischen Stromverbrauch, welche gegenüber dem Übertragungsnetzbetreiber für die Wahrung der Systemstabilität abgegeben werden müssen, gesamthaft, ohne Unterscheidung von nicht-steuerbaren und steuerbaren Lasten, erstellt. Dabei wird auf historische Werte zurückgegriffen und davon ausgegangen, dass gewisse Verhaltensmuster wiederkehrend sind. Das Schalten der steuerbaren Lasten, welches täglich zu derselben Uhrzeit geschieht, wird dabei ebenfalls als wiederkehrendes Verhaltensmuster betrachtet. Dieses Verfahren eignet sich für ein weitestgehend statisches System, insbesondere für den bekannten Fall, in welchem das Schaltmuster des Rundsteuersystems während längerer Zeit (z. B. über mehrere Jahre) gleich bleibt.

Das Energiesystem ist jedoch im Wandel begriffen. So bringt der Zubau von mehr und mehr stochastischen oder fluktuierenden Energieerzeugern wie Wind- oder Solarkraftwerke eine höhere Volatilität der Energieerzeugung mit sich. Während im traditionellen System die Energieproduktion (Angebot) sich nach dem Verbrauch richtete (Nachfrage), führt die stochastische Produktion neuer erneuerbarer Energie teilweise zu einer Umkehr dieses Prinzips: Wind- und Solarstrom richtet sich nach den meteorologischen Bedingungen und nicht nach dem Energiebedarf. Entsprechend muss das neue Energiesystem flexibler und kurzfristiger auf die wetterabhängige Produktion reagieren können. Hinzu kommt, dass in den meisten Märkten kein Monopol eines Netzbetreibers und Energieversorgers aus einer Hand mehr besteht, sondern verschiedene Energieversorger in dasselbe Netz Energie für eigene Kunden einspeisen können. In der Regel ist es der Netzbetreiber, welcher die Möglichkeit hat, Endgeräte aktiv an- und auszuschalten, insbesondere mit der oben erwähnten Rundsteuerung.

Aufgrund des vorgenannten Wandels wird es immer schwieriger, nicht nur die Stromproduktion zu regeln, sondern auch die Netzsicherheit zu gewährleisten. Ferner können heute die Energieversorger den Lastverlauf während eines Tages nicht mehr selbstständig messen, da sie in der Regel nicht mehr auch Netzbetreiber sind. In der Praxis bereitet beispielsweise der Netzbetreiber alle Messdaten auf, zieht alle grösseren Verbraucher ab, welche durch eine sogenannte Lastgangmessung viertelstundengenau gemessen wurden und übermittelt das Ergebnis dann mit Verzögerung, z. B. am folgenden Morgen, dem Energieversorger, damit dieser seinen Einkauf für den kommenden Tag planen kann. Diese Kurve wird "virtueller Kundenpool" genannt. Sie stellt ein aggregiertes Verbrauchssignal dar, welches sowohl die Last von hinsichtlich einer zeitlichen Verteilung des Bedarfs an elektrischer Energie zentral beeinflussbaren Verbrauchern als auch die Last von nicht zentral beeinflussbaren Verbrauchern umfasst.

Um die Lasten auch in einem zunehmend fluktuierenden und dynamischen System optimal steuern zu können, ist es wünschenswert, die Laststeuerung dynamischer einsetzen zu können. Dies würde es über die weiter oben erwähnten Anwendungen (optimale Netzauslastung, optimale Kraftwerkauslastung) hinaus auch ermöglichen, das Stromsystem dynamisch zu stabilisieren. Dies kann beispielsweise dadurch geschehen, dass die lokale, stochastische Produktion (insbesondere durch Photovoltaik-Kleinanlagen) mittels lokaler Lasten abgefangen wird. Beispielsweise könnten bei einer Photovoltaik-Mittagsspitze bei grosser Sonneneinstrahlung die Warmwasserboiler in der unmittelbaren Umgebung eingeschaltet werden. Eine andere Möglichkeit, zur Systemstabilisierung beizutragen, ist die Bereitstellung von sogenannter Regelenergie gegenüber dem Übertragungsnetzbetreiber. Hier werden Lasten auf Abruf des Übertragungsnetzbetreibers zugeschaltet oder abgeschaltet.

Solche Anwendungen, im Allgemeinen die dynamische Laststeuerung, erfordern entsprechend, dass die Lasten auch flexibel zu täglich wechselnden Zeiten ein- und ausgeschaltet oder gesteuert werden können. Weiter erfordern solche Ansätze im Prinzip genauere Kenntnisse über momentane Verbrauchsdaten der steuerbaren Lasten, d. h. über sowohl zeitlich als auch räumlich hoch aufgelöste Informationen, die - wie oben ausgeführt - heute in der Regel nicht zur Verfügung stehen.

Mehrere Formen des dynamischen Lastmanagements (demand side management, demand response) sind grundsätzlich bekannt. In der Regel werden eine Vielzahl von Sensoren und Aktoren eingesetzt, welche über geeignete Kommunikationsmittel verbunden sind und durch eine entsprechende Logik gesteuert werden. Ein Beispiel für ein solches System beschreibt die EP 2 378 483 A1 (General Electric).

Solche Ansätze erfordern jedoch die Installation von neuer, dezentraler Infrastruktur (Mess-, Steuer- und Kommunikationskomponenten) und sind entsprechend aufwändig und teuer.

**Darstellung der Erfindung**

Aufgabe der Erfindung ist es, ein dem eingangs genannten technischen Gebiet zugehörendes Verfahren zur Analyse eines aggregierten Verbrauchssignals zu schaffen, welches bei geringen Infrastrukturkosten detaillierte Aussagen liefert, die ein dynamisches Lastmanagement ermöglichen.

Die Lösung der Aufgabe ist durch die Merkmale des Anspruchs 1 definiert. Gemäss der Erfindung umfasst das Verfahren folgende Schritte:

a) Bereitstellung einer Parametrisierung für das aggregierte Verbrauchssignal, wobei die Parametrisierung eine erste Funktionengruppe von Funktionen zur Parametrisierung des Verbrauchs der ersten Verbrauchergruppe und eine zweite Funktionengruppe zur Parametrisierung des Verbrauchs der zweiten Verbrauchergruppe umfasst;

b) Durchführen einer Optimierung von Parametern der Parametrisierung zur Minimierung einer Fehlerfunktion, welche einer Abweichung zwischen der Parametrisierung und dem aggregierten Verbrauchssignal entspricht.

Die Verwendung zweier Funktionengruppen, die den zentral beeinflussbaren bzw. nicht zentral beeinflussbaren Verbrauchergruppen zugeordnet sind, ermöglicht eine Dekomposition des aggregierten Verbrauchssignals in steuerbare und nicht steuerbare Lasten. Für beide Verbrauchergruppen lässt sich der zeitliche Verlauf des jeweiligen Gesamtverbrauchs ermitteln. Damit dies möglich ist, werden wie weiter unten ausgeführt, mit Vorteil in der zweiten Funktionengruppe Funktionen verwendet, die sich möglichst schlecht durch die Basisfunktionen der ersten Funktionengruppe beschreiben lassen.

Unter einer "Beeinflussung" eines Verbrauchers kann sowohl ein einfaches Ein- bzw. Ausschalten der entsprechenden Stromzufuhr verstanden werden als auch andere Massnahmen, welche die Last des entsprechenden Verbrauchers verändern, z. B. eine Beschränkung der bezogenen Leistung o. ä.

Bei der Optimierung handelt es sich bevorzugt um eine numerische Optimierung. Dazu sind diverse Verfahren bekannt, die zur Minimierung der Fehlerfunktion einsetzbar sind, z. B. das sogenannte "simulated annealing". Es ist zu beachten, dass die Minimierung der Fehlerfunktion auch indirekt erfolgen kann, beispielsweise indem ein Maximum einer Gütefunktion ermittelt wird. Zentral ist, dass die Parametrisierung dem aggregierten Verbrauchssignal nach abgeschlossener Optimierung der Parameter möglichst nahe kommt.

Die Erfindung basiert auf der Erkenntnis, dass das aggregierte Verbrauchssignal (der virtuelle Kundenpool) nicht einfach nur aus einer unspezifischen Summe von Einzelhandlungen von Privatpersonen besteht, sondern dass es bestimmte Muster gibt, welche als selbstständige Teilsignale bzw. -lasten identifizierbar sind.

Das erfindungsgemässe Verfahren lässt sich vom Energieversorger, vom Netzbetreiber, von diesen Stellen gemeinsam oder von dritter Seite durchführen, sofern nur das aggregierte Verbrauchssignal (der "virtuelle Kundenpool") zur Verfügung steht. Die Kosten für zusätzliche Infrastruktur (Energiezähler, Kommunikationsmittel u.s.w.) werden minimiert.

Um die momentane Last einer durch die Rundsteueranlage geschalteten Verbrauchergruppe zu bestimmen, könnten die Lasten grundsätzlich ein- und gleich wieder ausgeschaltet werden, wobei die Differenz der bezogenen Leistung bestimmt wird. Gegenüber diesem aktiven Verfahren bietet das erfindungsgemässe Verfahren jedoch mehrere Vorteile: Es lässt sich auch auf historische Daten anwenden, welche keine derartigen Schaltvorgänge abbilden, es findet keine störende Beeinflussung der Verbraucher statt, und das Verfahren kann Informationen liefern, die über eine simple Leistungsangabe hinausgehen, insbesondere das zeitliche Verhalten des Verbrauchs einer Verbrauchergruppe betreffend.

Bei einer bevorzugten Ausführungsform der Erfindung umfasst die erste Verbraucher-gruppe mehrere Untergruppen mit jeweils einer Mehrzahl von Verbrauchern, wobei Verbraucher derselben Untergruppe jeweils gemeinsam zentral beeinflussbar sind. Diese Situation besteht heute bei einer Vielzahl von bestehenden elektrischen Verteilnetzen. Die steuerbaren Lasten sind in Untergruppen zusammengefasst, so dass sich zum einen die zusätzliche Last quantitativ beeinflussen lässt und zum anderen Lastspitzen beim Einschalten der steuerbaren Verbraucher vermeiden lassen. Die gemeinsame Beeinflussung bedeutet insbesondere, dass sämtliche Verbraucher einer bestimmten Untergruppe jeweils gleichzeitig aktiviert bzw. deaktiviert werden, durch einen einzigen entsprechenden Befehl des Netzbetreibers.

Die Untergruppen können ihrerseits gruppiert oder in weitere Teilgruppen unterteilt sein. Beispielsweise umfasst das Netz eines Netzbetreibers eine Reihe von Unterstationen, wobei für jede Unterstation mehrere Lastgruppen definiert sind. Die Steuerung zum Aktivieren der steuerbaren Lasten ist so ausgebildet, dass durch Senden eines entsprechenden Steuersignals nur diejenigen Lasten aktiviert werden, die definierten Lastgruppen angehören. Die einzelnen Lastgruppen als Untergruppen im Sinn der Erfindung sind somit durch die Zuordnung zu Unterstationen gruppiert.

Mit Vorteil sind die Verbraucher der Untergruppen zentral beeinflussbar.

Diese zentrale Beeinflussung kann mittels eines Rundsteuersystems erfolgen. Heutige Rundsteuersysteme übertragen die Steuerbefehle über das Stromversorgungsnetz selbst und ermöglichen bereits die Aktivierung bzw. Deaktivierung mehrerer Lastgruppen. Die systematische Erfassung des Stromverbrauchs dieser Lastgruppen ist jedoch in der Regel aufgrund fehlender spezifischer Zähler nicht möglich.

Alternativ können die Verbraucher Individualsteuerungen haben, welche vom Stromversoger in einer zweiten Art von Untergruppen zusammengefasst werden. Durch die Ausgabe der gleichen Steuerbefehle für alle Individualsteuerungen einer solchen Untergruppe zweiter Art können "virtuelle Rundsteuersysteme" geschaffen werden.

Die Erfindung basiert wie oben erwähnt auf der Erkenntnis, dass das aggregierte Verbrauchssignal (der "virtuelle Kundenpool") nicht einfach nur aus einer unspezifischen Summe von Einzelhandlungen von Privatpersonen besteht, sondern dass es bestimmte Muster gibt, welche als selbstständige Teilsignale bzw. -lasten identifizierbar sind. Dies gilt insbesondere für den Verbrauch, welcher durch die sogenannten Rundsteueranlagen gesteuert wird, denn dieser weist aufgrund der synchronen Einschaltung und der Charakteristik der Verbraucher (weitgehend konstanter Energieverbrauch während einer gewissen Zeitdauer) ein klares, identifizierbares Muster auf.

Trotzdem lässt sich die Erfindung grundsätzlich auch unabhängig von einem Rundsteuersystem einsetzen, generell immer dann, wenn aus einem aggregierten Gesamtverbrauchs-signal eine Zuordnung zu bestimmten Lasten oder Lastgruppen vorgenommen werden soll. Die Güte der Zuordnung ist abhängig von der Struktur des Verteilnetzes und der Charakteristik der einzelnen Lasten oder Lastgruppen.

Mit Vorteil erfolgt eine Zuordnung von Funktionen der ersten Funktionengruppe zu den Untergruppen anhand bekannter Einschaltzeiten der Untergruppen. Das erfindungsgemässe Verfahren ermöglicht eine Bestimmung der Verbrauchskurve einzelner Lastgruppen. Wenn diese Information zur Steuerung der Lastgruppen eingesetzt werden muss, ist eine Zuordnung notwendig. Im Fall eines Rundsteuersystems lässt sich diese auf einfache Weise und mit hoher Verlässlichkeit mittels der dem Energieversorger bzw. Netzbetreiber bekannten Einschaltzeiten des Rundsteuersystems bewerkstelligen. Diese Einschaltzeiten können bereits fix oder als Startparameter für die Optimierung vorgegeben werden oder nach erfolgter Optimierung mit der resultierenden Parametrisierung abgeglichen werden.

Alternativ erfolgt die Zuordnung auf anderer Basis, z. B. abgeschätzter oder bekannter Zusatzlasten der Untergruppen.

Vorzugsweise besteht die zweite Funktionengruppe aus zueinander orthogonalen zweiten Basisfunktionen. Dies ermöglicht eine verlässliche Parametrisierung mit einer Mindestzahl von Basisfunktionen und entsprechenden, voneinander weitgehend unabhängigen Parametern.

Bevorzugt sind die zweiten Basisfunktionen zeitlich periodisch. Es hat sich gezeigt, dass mit derartigen Funktionen (z. B. Sinus- und Cosinus-Funktionen der Fourier-Transformation oder Wavelets mit einer zeitlichen Periodizität in einem gewissen Zeitbereich) eine gute Parametrisierung erreicht werden kann, zumal einige Aspekte des Gesamtlastverlaufs eine gewisse Periodizität, insbesondere im Tages-, Wochen- oder Jahresrhythmus aufweisen.

Zusätzlich oder alternativ können auch andere zweite Basisfunktionen zum Einsatz gelangen, z. B. auch anders definierte Wavelets, welche im Zeitbereich stark lokalisiert sind. Diese ermöglichen insbesondere die Berücksichtigung von zeitlich lokalen, nicht-deterministischen Einflüssen.

Eine weitere Möglichkeit ist der Einsatz von Polynomen, z. B. 2. oder 3. Grades, für Interpolationen zwischen gewählten Zeitpunkten. Solche Zeitpunkte könnten zum Beispiel kurz vor dem Einschaltzeitpunkt und kurz nach dem Ausschaltzeitpunkt einer Rundsteuerung liegen. Daten von weiteren Zeitpunkten innerhalb des Intervalls können dazu genutzt werden, ein Polynom höheren Grades genauer zu bestimmen. So bietet sich zum Beispiel auch das tiefste Minimum innerhalb der Betriebszeit der Rundsteuerung als Stützstelle an. Bei fehlenden Daten können einzelne Parameter der Polynome aber auch geschätzt werden.

Mit Vorteil besteht die erste Funktionengruppe aus ersten Basisfunktionen $b_{1i}(t)$, welche wie folgt definiert sind:

$$b_{1i}(t) = f_{ein}(t) \text{ für } t_1 \le t < t_1 + \Delta t_{ein},$$

$$b_{1i}(t) = a_i \text{ für } t_1 + \Delta t_{ein} \le t \le t_2 - \Delta t_{aus},$$

$$b_{1i}(t) = f_{aus}(t) \text{ für } t_2 - \Delta t_{aus} < t \le t_2,$$

$$b_{1i}(t) = 0 \text{ sonst,}$$

wobei $f_{ein}(t)$ eine Einschaltfunktion, $f_{aus}(t)$ eine Ausschaltfunktion und $a_i$ einen konstanten Lastwert bezeichnen.

Man beachte, das sich die Worte "Einschaltfunktion" und "Ausschaltfunktion" nicht auf ein physikalisches Ein- und Ausschalten eines einzelnen Gerätes beziehen. Die Funktionen beschreiben das Ein- und Ausschaltverhalten einer Verbrauchergruppe, wobei jeder einzelne Verbraucher der Gruppe sich zu einem eigenen Zeitpunkt ein- und ausschalten kann. Man hat es also mit einer Faltung einer Vielzahl von individuellen Ein- und Ausschaltfunktionen einzelner Verbraucher zu tun. Das Einschalten der Verbraucher ist dabei typischerweise praktisch gleichzeitig. Der Ausschaltzeitpunkt eines einzelnen Verbrauchers hängt hingegen von seinem Energiebedarf ab und kann sich daher erheblich von dem anderer Verbraucher unterscheiden. Der Lastverlauf eines einzelnen Boilers, als Beispiel eines Gerätes welches häufig über Rundschaltungen gesteuert wird, ist typischerweise einer Rechtecksfunktion ähnlich.

Diese Basisfunktionen bilden einen erwarteten Lastverlauf einer synchron eingeschalteten Gruppe mehrerer Lasten ab. Nach dem synchronen Einschalten wird sich innerhalb einer verhältnismässig kurzen Zeit ein mehr oder weniger konstanter Lastwert $a_i$ einstellen. Der Verlauf bis zu diesem Zeitpunkt wird durch die Einschaltfunktion $f_{ein}(t)$ beschrieben. Diese hat zum Zeitpunkt $t_1$ mit Vorteil den Wert Null, damit sich ein stetiger Verlauf der Gesamtfunktion ergibt. Nach einer gewissen Zeit werden die einzelnen Lasten der Gruppe ihren Energiebezug nach und nach einstellen, weil beispielsweise das in einem Warmwasserspeicher vorhandene Wasser die vorgegebene Temperatur erreicht hat. Dies führt zu einem Abfallen der Gesamtlast der mit der entsprechenden Basisfunktion parametrisierten Lastgruppe i. Dieses Abfallen wird durch die Ausschaltfunktion $f_{aus}(t)$ beschrieben. Sie hat zum Zeitpunkt $t_2$ mit Vorteil ebenfalls wieder den Wert Null, damit der Verlauf der Gesamtfunktion stetig ist.

Vorzugsweise sind die Ein- und die Ausschaltfunktion linear, so dass die Basisfunktion $b_{1i}(t)$ einen trapezförmigen Verlauf hat, d. h.

$$f_{ein}(t) = (t-t_1) \, / \, \Delta t_{ein} \; a_i$$

und

$$f_{aus}(t) = (t_2-t) \, / \, \Delta t_{aus} \; a_i.$$

Die einzelnen Parameter $\Delta t_{ein}$, $\Delta t_{aus}$, $t_1, t_2$, $a_i$ (und gegebenenfalls weitere Parameter, welche die Ein- und die Ausschaltfunktion beschreiben), sind entweder bekannt bzw. vorgegeben (z. B. die Einschaltzeit $t_1$) oder resultieren aus der Optimierung.

Eine weitere Möglichkeit ist es, die Ausschaltfunktion durch eine S-förmige Kurve zu beschreiben. Eine solche Kurve könnte zum Bespiel durch eine halbe Gauss'sche Glockenkurve parametrisiert werden. Natürlich sind auch andere Beschreibungen der Kurve möglich. Es zeigt sich, dass sich die Kurve in vielen Fällen, insbesondere bei über Rundsteuersysteme gesteuerten Boilern und Verbrauchern mit rechteckigen Lastkurven, sehr gut durch eine kumulierte Gaussverteilungsfunktion oder eine kumulierte Dreiecksverteilungsfunktion beschreiben lässt. Andere Verteilungsfunktionen sind möglich. Die Verteilungsfunktion sollte möglichst den Leistungsbedarf der gesteuerten Verbraucher beschreiben.

Für die weitere Verarbeitung interessant sind primär die den Lastverlauf nach Einschaltung der Gruppe i charakterisierenden Parameter $a_i$, $t_2$ und $\Delta t_{aus}$. Die Einschaltfunktion dürfte in der Regel eine derart kurze Zeitspanne betreffen, dass sie mit einem Sprung von Null auf den Wert $a_1$ zum Zeitpunkt $t_1$ angenähert werden kann. Die verwendete Parametrisierung kann aber auch grössere Unsicherheiten des Einschaltpunktes und weniger steile Anstiege der Last abdecken.

Andere Parametrisierungen für die ersten Basisfunktionen sind möglich, z. B. dann wenn zusätzliche Informationen über die erwarteten Lastverläufe der einzelnen Gruppen vorliegen oder neben der Angabe der Lastgruppe zusätzliche Einflussgrössen berücksichtigt werden sollen.

Mit Vorteil wird ein zeitlicher Verlauf einer steuerbaren Gesamtlast als Summe der parametrisierten Funktionen der ersten Funktionengruppe bestimmt. Der steuerbare Anteil der Gesamtlast kann so isoliert werden. Für den nachfolgenden Einsatz, z. B. bei der Laststeuerung, kann diese Grösse weiter verarbeitet werden, z. B. indem Randbedingungen einbezogen werden.

Mit Vorteil beruht die Optimierung auf einer Mehrzahl von aggregierten Verbrauchssignalen von verschiedenen Zeiträumen. Beispielsweise können Verbrauchssignale in dieselbe Optimierung einfliessen, welche denselben Wochentag in derselben Jahreszeit betreffen. Für bestimmte Wochentage und Jahreszeiten können somit jeweils einzelne Parametrisierungen berechnet werden, welche spezifisch die entsprechend zu erwartende Situation betreffen, welche aber aufgrund des Einbezugs mehrerer aggregierter Signale statistisch eine höhere Aussagekraft haben.

Alternativ kann die Optimierung jeweils nur für einzelne Verbrauchssignale durchgeführt werden, und die Kombination mit anderen Verläufen erfolgt in einem weiteren Schritt auf der Ebene der Parametrisierung.

Die Erfindung betrifft ebenfalls ein Verfahren zur Laststeuerung in einem elektrischen Versorgungssystem, wobei zunächst die Parametrisierung für das aggregierte Verbrauchssignal durch das vorbeschriebene Verfahren bestimmt wird. Auf Basis dieser Parametrisierung wird anschliessend eine Prognose für einen zukünftigen Verbrauchsverlauf erstellt. Diese umfasst ihrerseits variable Parameter, insbesondere die Einschaltzeiten $t_1$ für die Verbraucher der ersten Verbrauchergruppe. Die Flexibilität der zentral beeinflussbaren Verbraucher kann somit aufgrund der erfindungsgemässen Parametrisierung und im Unterschied zu den statischen Prognosen gemäss dem Stand der Technik berücksichtigt werden.

Vorzugsweise kann der Vergleich zwischen Prognose und Messwerten für eine ständige Überprüfung der Prognosenqualität genutzt werden. Aus historischen Parameterdaten können Anfangsschätzungen für zukünftige Optimierungsverfahren und damit die zukünftige Parameterbestimmung gewonnen werden. In einer bevorzugten Variante werden frühere Messungen mit dem erfindungsgemässen Verfahren zur Prognoseerstellung genutzt und gleichzeitig aktuelle Messungen durchgeführt. Die aktuellen Messungen dienen dann als Kontrolle der Prognosen und zur Schätzung der Prognosengüte. Ausserdem sind sie die Basis für Prognosen in der Zukunft.

Frühere Parameterbestimmungen können auch genutzt werden, um den Parameterraum einzuschränken. So ist es zum Beispiel möglich, die zu bestimmenden Parameter nur aus dem Intervall "Historischer Wert" +/- 5% zu wählen. Der dazu benutzte historische Wert ist dabei beispielsweise ein Mittelwert über einen möglichst langen, geeigneten Zeitraum. Bei der Wahl dieses Zeitraumes kann es nötig sein, auf äussere Umstände wie z. B. Jahreszeiten zu achten. Auch kann der historische Wert aktualisiert werden, damit langfristige Trends erfasst werden können.

Es wird nun eine Nutzenfunktion definiert und es werden zumindest Einschaltzeiten $t_1$ für die Verbraucher der ersten Verbrauchergruppe derart optimiert, dass die Nutzenfunktion ausgewertet für die resultierende Prognose maximiert wird.

Diese resultierende Prognose, welche der maximierten Nutzenfunktion entspricht, wird in weiteren Schritten im Rahmen des Verfahrens zur Laststeuerung eingesetzt, um die zeitliche Abfolge von Steuerbefehlen und/oder die Auswahl der zu steuernden Lasten zu definieren oder zu beeinflussen.

Die Nutzenfunktion kann unterschiedliche Aspekte berücksichtigen, z. B. die Energiekosten, die Netzsicherheit, die Netzauslastung oder den Kundenkomfort, bzw. mehrere dieser Faktoren mit einer geeigneten Gewichtung einbeziehen. Die Netzsicherheit stellt beispielsweise in der Regel keine Optimierungsgrösse im eigentlichen Sinn dar, sondern eine harte Randbedingung. Diese kann im Rahmen der Optimierung beispielsweise in an sich bekannter Weise berücksichtigt werden, indem eine Verletzung der Netzsicherheit mit unendlich hohen Kosten (oder negativem Nutzen) gleichgesetzt wird.

Die Optimierung kann mit grundsätzlich bekannten Methoden numerisch erfolgen. Wiederum ist anzumerken, dass die Maximierung der Nutzenfunktion einer Minimierung einer entsprechend anders definierten Zielfunktion entsprechen kann.

Insbesondere werden für das Erstellen der Prognose zumindest Einschaltzeiten $t_1$ für die Verbraucher der ersten Verbrauchergruppe vorgegeben. Anhand der erstellten Prognose können die Auswirkungen eines geplanten Schalt-Fahrplans bestimmt und bewertet werden. Je nach Bewertung erfolgt anschliessend eine Anpassung des geplanten Schalt-Fahr-plans, so dass in einem iterativen Prozess ein optimal auf die jeweiligen Bedürfnisse angepasster Plan erstellt werden kann.

Neben der Einschaltzeit können weitere Parameter angegeben werden, z. B. Ausschaltzeiten für die Verbraucher der ersten Verbrauchergruppe.

Solange ein Energieversorger oder Netzbetreiber die steuerbaren Lasten täglich zum gleichen Zeitpunkt ein- oder ausschaltet, ist es nicht notwendig, dass er die genaue Form der Signale kennt. Aufgrund der Historie ist es möglich, den Verbrauch für den Einkauf bzw. für die Netzsicherheit abzuschätzen. Möchte ein Energieversorger hingegen die Lasten täglich zu anderen Zeiten aktivieren, hat er das Problem, dass er in der Regel nicht genau vorhersagen kann, wie viel Energie er in den betroffenen Zeiten mehr bzw. weniger benötigt. Das gleiche Problem hat der Netzbetreiber, denn er kann, wenn er den Schaltvorgang für den Energieversorger ausführt, nicht sicher sein, dass das Netz zur angegebenen Zeit die aktivierte Last überhaupt verkraften kann. Das Erstellen einer von vorgebbaren Einschaltzeiten abhängigen Prognose leistet somit sowohl dem Energieversorger als auch dem Netzbetreiber wertvolle Dienste.

In einer vorteilhaften Variante des Verfahrens werden Machine-learning-Verfahren mit historischen Verbrauchsdaten trainiert, um basierend auf der bestimmten Parametrisierung eine Prognose in Abhängigkeit weiterer Parameter, insbesondere Wochentag, Datum und/oder Wetterdaten, zu ermöglichen. Solche Machine-learning-Verfahren können zum Beispiel Cluster-Algorithmen oder neuronale Netzwerke sein.

Auf diese Weise kann der Einfluss netzexterner Faktoren bei der dynamischen Planung der Laststeuerung auf einfache Weise einbezogen werden. Letztlich wird es ermöglicht, basierend auf einem möglichst vollständigen Satz von vorbekannten und verbrauchsrelevanten Informationen eine präzise Prognose für den Gesamtlastverlauf zu erstellen, wobei die Schaltvorgänge der steuerbaren Lasten als variable Einflussparameter vorgebbar sind.

Mit Vorteil wird die Optimierung der Nutzenfunktion mindestens täglich durchgeführt und eine Steuerung der Verbraucher der ersten Verbrauchergruppe wird in mindestens demselben Rhythmus entsprechend angepasst. Dadurch ergibt sich eine dynamische Laststeuerung, welche sich in den heutigen Netzen ohne weiteres umsetzen lässt und jeweils die aktuell verfügbaren Informationen (z. B. auch hinsichtlich Witterung) berücksichtigt.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1    Eine schematische Ansicht eines Stromversorgungsnetzes mit zentral beeinflussbaren und nicht zentral beeinflussbaren Verbrauchern;

Fig. 2    eine mögliche Basisfunktion zur Parametrisierung des Verbrauchs einer zentral beeinflussbaren Verbrauchergruppe; und

Fig. 3    ein Beispiel einer Gesamtlastkurve und der entsprechenden Parametrisierung.

Grundsätzlich sind in den Figuren gleiche Teile mit gleichen Bezugszeichen versehen.

**Wege zur Ausführung der Erfindung**

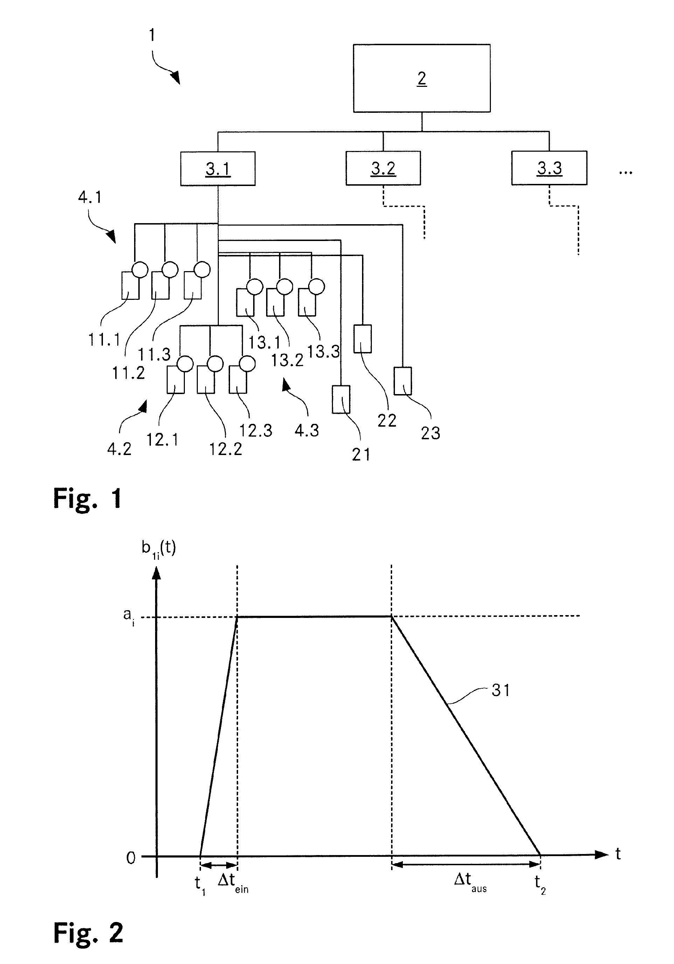

Die Figur 1 zeigt eine schematische Ansicht eines Stromversorgungsnetzes mit zentral beeinflussbaren und nicht zentral beeinflussbaren Verbrauchern. Das Stromversorgungsnetz 1 umfasst eine Vielzahl nicht dargestellter und in der Figur durch den Kasten 2 repräsentierte Komponenten zur Produktion, Einspeisung, Steuerung und Verteilung elektrischer Energie. Ebenfalls umfasst das Stromversorgungsnetz 1 mehrere Unterstationen 3.1, 3.2, 3.3, ... zur Versorgung einer gewissen Zahl von Verbrauchern. Die Verbraucher gliedern sich in zentral beeinflussbare Verbraucher, also z. B. solche, welche mittels einer Rundsteueranlage ein- und ausgeschaltet werden können, und in zentral nicht beeinflussbare Verbraucher 21, 22, 23. Die zentral beeinflussbaren Verbraucher sind in mehrere Untergruppen 4.1, 4.2, 4.3 gegliedert, welche jeweils mehrere zentral beeinflussbare Verbraucher umfassen. So beinhaltet eine erste Untergruppe 4.1 beispielsweise die Verbraucher 11.1, 11.2, 11.3, eine zweite Untergruppe 4.2 die Verbraucher 12.1, 12.2, 12.3 und eine dritte Untergruppe 4.3 die Verbraucher 13.1, 13.2, 13.3.

Es ist zu beachten, dass die Figur 1 die tatsächliche Situation stark vereinfacht wiedergibt. So gehören den Untergruppen in der Regel eine viel grössere Zahl von beeinflussbaren Verbrauchern an und die Anzahl unterscheidet sich von Untergruppe zu Untergruppe. Auch sind natürlich jeder Unterstation eine grössere Zahl von nicht beeinflussbaren Verbrauchern zugeordnet, und auch die Zahl der Untergruppen ist in der Regel grösser. Schliesslich entspricht das durch die Verbindungslinien angedeutete Versorgungsnetz nicht dem tatsächlichen Aufbau, weil in der Regel in demselben Haushalt bzw. in demselben Betrieb sowohl beeinflussbare als auch nicht beeinflussbare Verbraucher vorhanden sind und die Aufteilung der Versorgungsleitung erst nach dem Hauptanschluss des entsprechenden Haushalts bzw. Betriebs erfolgt.

Die Figur 2 zeigt eine mögliche Basisfunktion zur Parametrisierung des Verbrauchs einer zentral beeinflussbaren Verbrauchergruppe i. Die Funktion 31 beschreibt den Verbrauch $b_{1i}(t)$ in Funktion der Zeit t und ist wie folgt definiert:

$$b_{1i}(t) = (t-t_1) \, / \, \Delta t_{ein} \; a_i \; \text{für} \; t_1 \leq t < t_1 + \Delta t_{ein},$$

$$b_{1i}(t) = a_i \; \text{für} \; t_1 + \Delta t_{ein} \leq t \leq t_2 - \Delta t_{aus},$$

$$b_{1i}(t) = (t_2 - t) \, / \, \Delta t_{aus} \; a_i \; \text{für} \; t_2 - \Delta t_{aus} < t \leq t_2,$$

$$b_{1i}(t) = 0 \; \text{sonst.}$$

Diese Basisfunktion bildet den erwarteten Lastverlauf einer synchron eingeschalteten Gruppe mehrerer Lasten ab. Nach dem synchronen Einschalten stellt sich innerhalb einer verhältnismässig kurzen Zeit $\Delta t_{ein}$ ein mehr oder weniger konstanter Lastwert $a_i$ ein. Nach einer gewissen Zeit werden die einzelnen Lasten der Gruppe ihren Energiebezug nach und nach einstellen, weil beispielsweise das in einem Warmwasserspeicher vorhandene Wasser die vorgegebene Temperatur erreicht hat. Dies führt zu einem allmählichen Sinken der Gesamtlast der mit der entsprechenden Basisfunktion parametrisierten Verbrauchergruppe i. Dieser Zeitraum wird als lineares Abfallen während der Ausschaltzeit $\Delta t_{aus}$ modelliert.

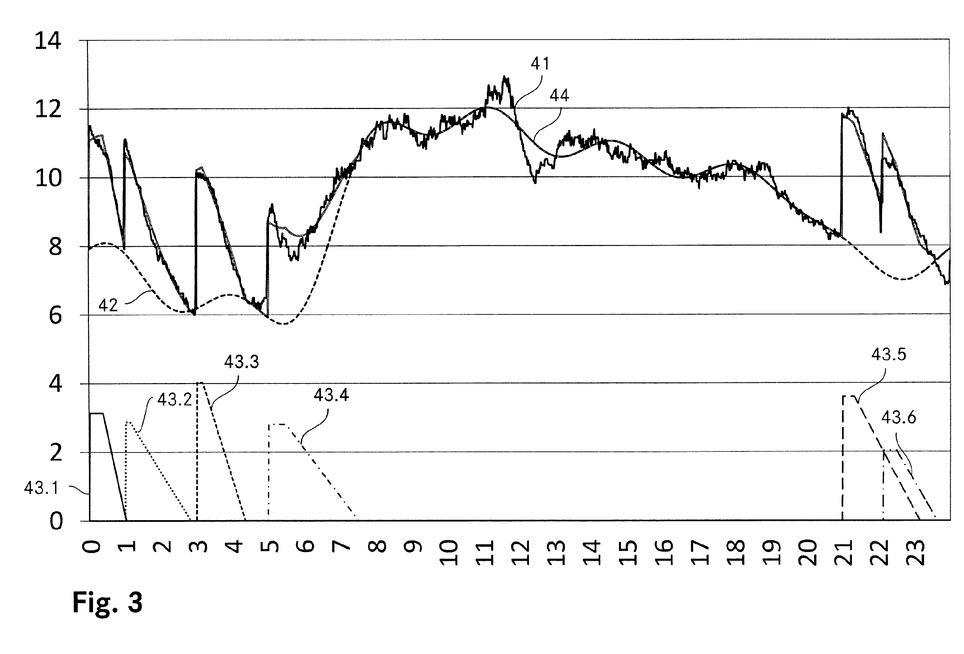

Die Figur 3 zeigt ein Beispiel einer Gesamtlastkurve und der entsprechenden Parametrisierung. Dargestellt ist das gemessene Gesamtsignal 41 ("virtueller Kundenpool") für einen Tag (24h), welches sich aus dem nicht beeinflussbaren, stochastischen Verhalten der Endkunden und den Auswirkungen der Steuerung der zentral beeinflussbaren Lasten ergibt. Ziel des nachfolgend beschriebenen Verfahrens ist eine Dekomposition des Gesamtsignals 41 in eine Funktion V(t), welche das stochastische Verhalten der Endkunden beschreibt und in zusätzliche Signale $R_i(t)$, i=1...N, welche aufgrund der synchronen Schaltung von vielen Lasten, z. B. durch ein Rundsteuersystem, gleichzeitig erfolgen.

V(t) und alle $R_i(t)$ können durch parametrisierbare Funktionen Va(t) (Bezugszeichen 42) und $Ra_i(t)$ (Bezugszeichen 43.1...6) approximiert werden. Es wird im Folgenden davon ausgegangen, dass die Parameter von Va und $Ra_i$, welche für jeden Tag verschieden sein können, nicht bekannt sind.

Setzt man die Parameter von Va(t) und $Ra_i(t)$ auf beliebige Werte, ergibt sich eine approximierte Funktion Ga(t), welche sich von der tatsächlich gemessenen Funktion G(t) in einem Fehler F(t) := |G(t) - Ga(t)| unterscheidet. Das Integral von F(t) über ein Zeitintervall $[t_1; t_2]$ ist der Gesamtfehler der Approximation von Ga(t). Variiert man nun die Parameter von Va(t) und $Ra_i(t)$, wird sich auch der Gesamtfehler über dem Intervall $[t_1;t_2]$ verändern. Durch ein an sich bekanntes, geeignetes Verfahren (z. B. simulated anealing) werden nun Parameter für Ga(t) bestimmt, bei denen der Fehler F(t) minimiert wird.

Da es sich um die Analyse einer gemessen Funktion handelt, kann durch entsprechende Wahl von Funktionen Va(t) und $Ra_i(t)$ der Fehler von F prinzipiell beliebig minimiert werden. Dabei ist darauf zu achten, dass die Anzahl der Parameter von Va(t) und $Ra_i(t)$ so gewählt wird, dass keine Überbestimmung erfolgt und möglichst eine eindeutig und physikalisch sinnvolle Lösung resultiert.

Dazu wird Va(t) aus orthogonalen Basisfunktionen aufgebaut. Im vorliegenden Beispiel wird die Funktion Va(t) als endliche Fourierreihe entwickelt:

$$Va(t) = g_1 \cdot \sin(t') + h_1 \cdot \cos(t') + g_2 \cdot \sin(2t') + h_2 \cdot \cos(2t') \ldots,$$

wobei t' = $(2\pi/24h) \cdot t$ und wobei Terme bis zur siebten Ordnung berücksichtigt werden.

Die Funktionen $Ra_i(t)$ entsprechen im vorliegenden Beispiel den im Zusammenhang mit der Figur 2 beschriebenen einfachen Funktionen. Diese können schlecht durch die Basisfunktionen von Va(t) beschrieben werden. Sind einige Parameter der Funktionen $Ra_i(t)$ bekannt, wie z. B. der Startpunkt der Signale und/oder deren maximale Höhe, kann der Phasenraum für die Optimierung bereits zu diesem Zeitpunkt entsprechend eingeschränkt werden. Im vorliegenden Beispiel ist der Zeitpunkt $t_1$ bekannt aus der Datenbank der Rundsteuersender. Als Anfangswert für $a_i$ für die Optimierung werden die letzten bzw. nächsten Minuten einer Schaltzeit betrachtet, $a_i$ ist dann die Differenz zwischen grösstem und kleinstem gemessenem Wert.

Im Ergebnis der Optimierung ergibt sich eine Separation der Teilsignale, wie sie vom Netzbetreiber benötigt wird, um den einzelnen Energieversorgern entsprechende Auswertungen zur Abrechnung bzw. zur Prognose von zukünftigen Lasten schicken zu können. Zudem kann wie oben beschrieben der Netzbetreiber die Aufgabe übernehmen, den gewünschten Schaltvorgang eines Energieversorgers aufgrund der historischen Daten in Form einer Prognose bzgl. der Netzauslastung zu bewerten.

Die parametrisierten Signale sind in der Figur 3 dargestellt, namentlich Va(t) (Kurve 42) als Parametrisierung des stochastischen Verhaltens der Endkunden (virtueller Kundenpool) und $R_i(t)$, i=1...6 (Bezugszeichen 43.1...6) als Parametrisierung der synchronen Schaltung verschiedener Last-Untergruppen durch ein Rundsteuersystem. Wie aus der Figur ohne weiteres ersichtlich ist, entspricht die Summe der parametrisierten Funktionen, die Kurve 44, sehr gut dem tatsächlichen Lastverlauf (Gesamtsignal 41). Die sechs Schaltungen von Last-Untergruppen erfolgten zu den Zeitpunkten 0h, 1h, 3h, 5h, 21h und 22h08. Wie aus den entsprechenden Kurven erkennbar ist, unterscheiden sich die Last-Untergruppen sowohl hinsichtlich ihrer Maximallast als auch bezüglich der Bezugsdauer und des Rückgangs des Energiebezugs.

Die Optimierung kann sich anstelle eines einzelnen 24h-Intervalls auf mehrere benachbarte oder nicht benachbarte Perioden mit ähnlichen externen Bedingungen beziehen. Alternativ können die gefundenen Parameter für eine Mehrzahl von Tagen miteinander abgeglichen werden, um ein statistisch verlässlicheres Ergebnis zu erzielen.

Sollen die parametrisierten Funktionen zu wirtschaftlich oder netztechnisch relevanten Zwecken eingesetzt werden, ist mit üblichen Methoden eine gesicherte Fehlertoleranz zu bestimmen, welche die nötigen Akkreditierungen ermöglicht.

Durch Variation der Startpunkte der Lasten $Ra_i(t)$ ist es möglich, die Kurven $Va(t)$ und $Ra_i(t)$ noch besser voneinander zu trennen.

Die Erfindung ist nicht auf das beschriebene Ausführungsbeispiel beschränkt. So kann beispielsweise die Funktion $Va(t)$ auf andere Weise parametrisiert werden, z. B. indem eine Fourierreihe anderer Ordnung verwendet wird oder indem ein Satz von Basisfunktionen gewählt wird, welcher die grundlegende Form von $V(t)$ aufnimmt (z. B. als Grundfunktion der Mittelwert von vielen Tagesmessungen), so dass die Anteile der "höheren" Basisfunktionen am Gesamtsignal schnell abfallen. Als Alternative zur Fourier-Entwicklung stehen u. a. Wavelets zur Verfügung, mit welchen sich gewisse Anschlussbedingungen und Entwicklungen auf verschiedenen Zeitskalen besser modellieren lassen. Ebenfalls sind Polynome als Ausgleichs- und/oder Interpolations-funktionen nutzbar.

Die Nutzung von Polynomen oder anderen Funktionen mit nur wenigen zu bestimmenden Parametern kann wie folgt geschehen: Man beschränkt den Zeitraum der analysiert wird auf ein Minimum. Das geschieht zum Beispiel unter Nutzung der bekannten Ein- und Ausschaltzeiten eines Rundsteuersystems. Für die ungesteuerten Anteile der Last, die durch $Va(t)$ beschrieben werden, trifft man die Annahme, dass sie sich ausreichend präzise mit einem Polynom tiefen Grades oder einer anderen einfachen Funktion approximieren lassen. Die Nutzung eines beschränkten Zeitraumes und typischerweise auch die Tatsache, dass es sich um Zeiträume mit geringen Schwankungen in der nicht-gesteuerten Last handelt (z.B. in der Nacht) verringert die Fehler der Approximation. Die wenigen freien Parameter, die eine einfache $Va(t)$ Funktion aufweist, erlauben es mit nur einem Minimum an Messungen zu arbeiten. Diese können zum Beispiel kurz vor dem Anschaltzeitpunkt des Rundsteuersystems und kurz nach dessen Abschalten liegen. Damit sind nun schon die Anteile der steuerbaren und nicht-steuerbaren Lasten getrennt. Die folgende Optimierungs- und Anpassungsrechnung ist also nur noch auf die Trennung und Charakterisierung unterschiedlicher steuerbarer Lastengruppen gerichtet. Nutzt man für diese Analyse zudem die Informationen über die Anschaltzeitpunkte der unterschiedlichen Lastengruppen, so beziehen sich die zu bestimmenden Parameter nur noch auf die Form der unterschiedlichen Funktionen $Ra_i(t)$. Die Anzahl zu bestimmender Parameter nimmt also ab womit die Anpassungsrechnung sich vereinfacht und stabilisiert. Zusammenfassend ist festzustellen, dass die Erfindung ein Verfahren zur Analyse eines aggregierten Verbrauchssignals schafft, welches bei geringen Infrastrukturkosten detaillierte Aussagen liefert, die ein dynamisches Lastmanagement ermöglichen.

## Patentansprüche

1. Verfahren zur Analyse eines aggregierten Verbrauchssignals einer Mehrzahl von Verbrauchern mit zeitlich variablem Bedarf an elektrischer Energie, wobei eine erste Verbrauchergruppe der Mehrzahl von Verbrauchern hinsichtlich einer zeitlichen Verteilung des Bedarfs an elektrischer Energie zentral beeinflussbar ist und wobei eine zweite Verbrauchergruppe der Mehrzahl von Verbrauchern nicht zentral beeinflussbar ist, **gekennzeichnet durch** folgende Schritte:

   a) Bereitstellung einer Parametrisierung für das aggregierte Verbrauchssignal, wobei die Parametrisierung eine erste Funktionengruppe von Funktionen zur Parametrisierung des Verbrauchs der ersten Verbrauchergruppe und eine zweite Funktionengruppe zur Parametrisierung des Verbrauchs der zweiten Verbrauchergruppe umfasst;
   b) Durchführen einer Optimierung von Parametern der Parametrisierung zur Minimierung einer Fehlerfunktion, welche einer Abweichung zwischen der Parametrisierung und dem aggregierten Verbrauchssignal entspricht.

2. Verfahren nach Anspruch 1, **dadurch gekennzeichnet, dass** die erste Verbrauchergruppe mehrere Untergruppen mit jeweils einer Mehrzahl von Verbrauchern umfasst, wobei Verbraucher derselben Untergruppe jeweils gemeinsam zentral beeinflussbar sind.

3. Verfahren nach Anspruch 2, **dadurch gekennzeichnet, dass** die Verbraucher der Untergruppen zentral beeinflussbar sind.

4. Verfahren nach Anspruch 3, **dadurch gekennzeichnet, dass** die zentrale Beeinflussung mittels eines Rundsteuersystems erfolgt.

5. Verfahren nach Anspruch 3 oder 4, **dadurch gekennzeichnet, dass** eine Zuordnung von Funktionen der ersten Funktionengruppe zu den Untergruppen anhand bekannter Einschaltzeiten der Untergruppen erfolgt.

6. Verfahren nach einem der Ansprüche 1 bis 5, **dadurch gekennzeichnet, dass** die zweite Funktionengruppe aus einem oder mehreren Polynomen gebildet ist.

7. Verfahren nach einem der Ansprüche 1 bis 6, **dadurch gekennzeichnet, dass** die erste Funktionengruppe aus ersten Basisfunktionen $b_{1i}(t)$ besteht, welche wie folgt definiert sind:

$$b_{1i}(t) = f_{ein}(t) \text{ für } t_1 \leq t < t_1 + \Delta t_{ein},$$

$$b_{1i}(t) = a_i \text{ für } t_1 + \Delta t_{ein} \leq t \leq t_2 - \Delta t_{aus},$$

$$b_{1i}(t) = f_{aus}(t) \text{ für } t_2 - \Delta t_{aus} < t \leq t_2,$$

$$b_{1i}(t) = 0 \text{ sonst,}$$

wobei $f_{ein}(t)$ eine Einschaltfunktion, $f_{aus}(t)$ eine Ausschaltfunktion und $a_i$ einen konstanten Lastwert bezeichnen.

8. Verfahren nach einem der Ansprüche 1 bis 7, **dadurch gekennzeichnet, dass** ein zeitlicher Verlauf einer steuerbaren Gesamtlast als Summe der parametrisierten Funktionen der ersten Funktionengruppe bestimmt wird.

9. Verfahren nach einem der Ansprüche 1 bis 8, **dadurch gekennzeichnet, dass** die Optimierung auf einer Mehrzahl von aggregierten Verbrauchssignalen von verschiedenen Zeiträumen beruht.

10. Verfahren zur Laststeuerung in einem elektrischen Versorgungssystem, umfassend folgende Schritte:

a) Bestimmen der Parametrisierung für das aggregierte Verbrauchssignal durch das Verfahren nach einem der Ansprüche 1 bis 9,
b) Erstellen einer Prognose für einen zukünftigen Verbrauchsverlauf basierend auf der bestimmten Parametrisierung,
c) Definieren einer Nutzenfunktion und Optimierung von zumindest Einschaltzeiten $t_1$ für die Verbraucher der ersten Verbrauchergruppe derart, dass die Nutzenfunktion ausgewertet für die resultierende Prognose maximiert wird.

11. Verfahren nach Anspruch 10, **dadurch gekennzeichnet, dass** für das Erstellen der Prognose zumindest Einschaltzeiten $t_1$ für die Verbraucher der ersten Verbrauchergruppe vorgegeben werden.

12. Verfahren nach Anspruch 10 oder 11, **dadurch gekennzeichnet, dass** ein Machinelearning-Verfahren mit historischen Verbrauchsdaten trainiert wird, um basierend auf der bestimmten Parametrisierung eine Prognose in Abhängigkeit weiterer Parameter, insbesondere Wochentag, Datum und/oder Wetterdaten, zu ermöglichen.

13. Verfahren nach einem der Ansprüche 10 bis 12, **dadurch gekennzeichnet, dass** die Optimierung der Nutzenfunktion mindestens täglich durchgeführt und eine Steuerung der Verbraucher der ersten Verbrauchergruppe entsprechend angepasst wird.

**Fig. 1**

**Fig. 2**

**Fig. 3**

EP 2 854 250 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2378483 A1